# EUROPEAN PATENT SPECIFICATION

(11) **EP 3 756 438 B1**
(45) Date of publication and mention of the grant of the patent: **09.08.2023**
(21) Application number: 19182991.0
(22) Date of filing: 27.06.2019
(51) Int. Cl.: A01D 34/28, A01D 41/14

(54) **COMBINE HEADER COMPRISING A CENTRALLY EXTENDING HEADER FLOOR**
MÄHDRESCHERSCHNEIDWERK MIT ZENTRAL AUSFAHRBAREM SCHNEIDWERKBODEN
MOISSONNEUSE-BATTEUSE DOTÉE D'UN PLANCHER À EXTENSION CENTRALE

(43) Date of publication of application: 30.12.2020
(73) Proprietor: CNH Industrial Belgium N.V., 8210 Zedelgem (BE)
(72) Inventor: Ysebaert, Maarten, 8700 Tielt (BE); Vandergucht, Yvan C.C., 8647 Lo-Reninge (BE); Lagaese, Niko, 8000 Brugge (BE); Borry, Stijn, 8740 Pittem (BE)
(74) Representative: CNH Industrial IP Department

(56) References cited:
- EP-A1- 2 735 220
- AT-B- 396 860
- GB-A- 1 275 492
- US-A1- 2011 005 184

## Description

### Field of the Invention

The present invention is related to self-propelled agricultural machines such as combine harvesters, in particular to a header suitable for use in such machines.

### State of the art.

Agricultural combine harvesters are machines designed for harvesting and processing crops such as wheat or corn. Crops are cut from the field on a wide area by the header mounted at the front of the combine. The harvested material is brought to a central area of the header, and from there it is transported by the feeder to a threshing mechanism comprising laterally or longitudinally mounted threshing rotors and further to the cleaning section comprising a number of sieves where grains are separated from any remaining crop residue.

The mechanism used for moving the crops towards the centre of the header may be a rotating auger or a conveyor belt. In the case of a rotating auger, the floor of the header extends under and in front of the auger, and the cutter bar is placed at the front of the floor. The crops which are cut fall onto the floor after which they are progressively collected by the auger towards the centre of the header. One problem that is often encountered in the field, is that there is a build-up of crop material in the central area. This build-up forms an obstruction for the adequate cutting and harvesting of crops in that central area. One known solution to this problem is to provide a moveable header floor. The floor as a whole can be extended forward, thereby providing more support for harvested crops in the central area. This is a useful feature, that allows also to adapt the length of the floor to the height of the harvested crops.

However, while the latter solution solves the obstruction problem in the centre, the extended floor is not always ideal in the lateral portions of the header, where the length of the floor may not be matched to the density and height of the crops, leading to irregular feeding from the sides.

### Summary of the invention

The invention is related to a header for a combine harvester and to a combine harvester, in accordance with the appended claims. In a header according to the invention, the header floor extends further outward in the centre of the header than at the sides, or the header floor is extendable further outward in the centre than at the sides. According to preferred embodiments, the front border of the header floor is V-shaped, the V-shape being either fixed or adjustable. In the latter case, the header may comprise pivotable cutterbar portions and/or pivotable floor portions configured to pivot forward or backward in order to assume an adjustable V-shape of the floor's front border. Suitable actuators are present to control the adjustment of the floor's shape, while cover plates may be included to cover any gaps appearing when the floor assumes the V-shape. The invention is equally related to a combine harvester comprising a header in accordance with the invention.

### Brief description of the figures

Figure 1a is an image of a header for a combine harvester as known in the art. Figure 1b shows a detail of the overlap area of the knives at the front of the prior art header.
Figure 2a is a schematic top view of a header according to a first embodiment of the invention, having a header floor with a V-shaped front border of fixed dimensions. Figure 2b shows a detail of the area where the knives overlap.
Figures 3a and 3b illustrate the operation of a header according to a second embodiment, wherein the front border of the header floor can be controlled between a straight border and a V-shaped border.
Figures 4a and 4b illustrate an alternative version of a header according to the second embodiment.
Figures 5a to 5c illustrate an embodiment of a header according to the invention, wherein the front border of the header floor can be controlled between a straight border and a V-shaped border, and wherein the header floor as a whole can be moved forwards and backwards.
Figure 6 illustrates another embodiment of a header according to the invention, having a floor that is longer in a central area than at the sides.

### Detailed description of preferred embodiments of the invention

Preferred embodiments will now be described with reference to the drawings. The detailed description is not limiting the scope of the invention, which is defined only by the appended claims.

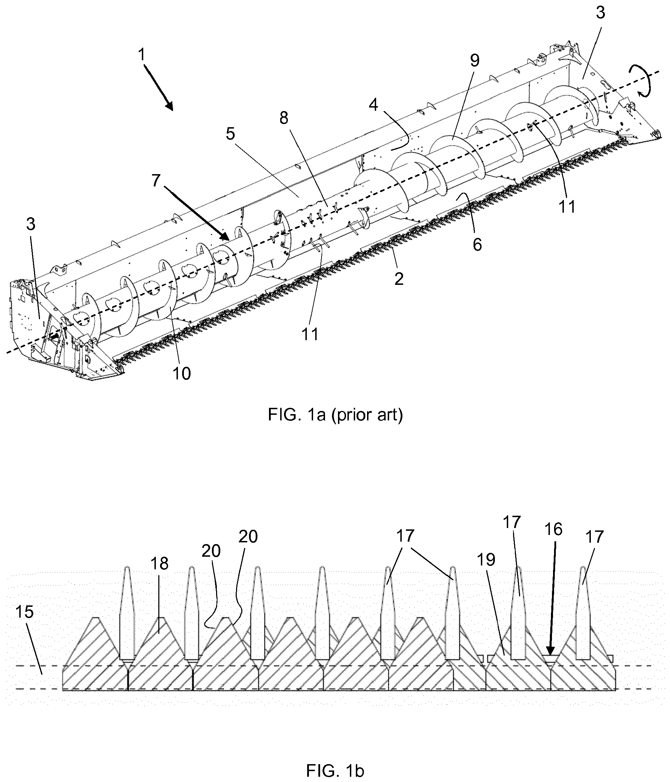

Figure 1a shows a header 1 as known in the art, provided with an auger-based mechanism. The header comprises a cutterbar 2 mounted between the two side walls 3 of the header, a back wall 4 that includes an entry port 5 towards the feeder of the combine (not shown), and a header floor 6 with the cutterbar 2 located at the front of the header floor 6. The sidewalls 3 and the back wall 4 are the main components of the header frame, i.e. the structure of the header onto which the other header parts are mounted, including the parts which are rotatable or otherwise movable relative to the frame.

The rotatable auger 7 comprises a cylindrical tube 8 extending essentially along the full width of the header and provided with two oppositely wound helicoidal flights 9 and 10 on either side of a central area. When the auger rotates in the direction indicated by the arrow, the helicoidal flights push the crops towards the centre. The auger is additionally provided with auger fingers 11 configured to support the crops during their movement along the auger's longitudinal direction. The fingers 11 are operated by a crank mechanism mounted inside the tube 8. The auger 7 is rotatably supported at its outer ends by suitable bearings in the sidewalls 3 of the header, and coupled to a drive mechanism (not shown) for driving the auger's rotation.

The cutterbar 2 comprises knives which are configured to undergo a reciprocating motion in the direction of the width of the header, relative to stationary knife guards, so as to effectively cut off the crops by the motion of the knives relative to the knife guards. Typically, the cutterbar 2 comprises a stationary set of knife guards and two sets of reciprocating knives, the sets being driven by respective drive mechanisms mounted at the two sides of the header. The reciprocating knife sets are configured, preferably in a synchronized way, to move in opposite directions, overlapping in a central area of the header. A detail of the area of overlap in a prior art header is shown in Figure 1b as seen from the top. A support beam 15 extends between the sidewalls 3 of the header. At the front of the support beam 15, a series of knife guards 16 are mounted, each guard comprising two forwardly projecting fingers 17. All the knife guards 16 along the width of the header are stationary. The left-hand side knife set consists of a row of knives 18 assembled together so as to operate as a single body. Likewise, the right-hand side knife set consists of a row of knives 19 assembled together so as to operate as a single body. The knives have the same triangular shape with a cutting edge 20 on each side. The fingers 17 are provided with slots at the back for allowing the knives to perform the reciprocating motion relative to the stationary fingers 17. In the overlap area of the knives, the slots are sufficiently wide to accommodate the two superposed knife sets.

As described in the previous section, the length of the header floor 6 as measured from the back to the front of the prior art header 1 illustrated in Figure 1a is constant across the full width of the header, which may lead to problems in terms of crop build-up and obstruction at the centre of the header.

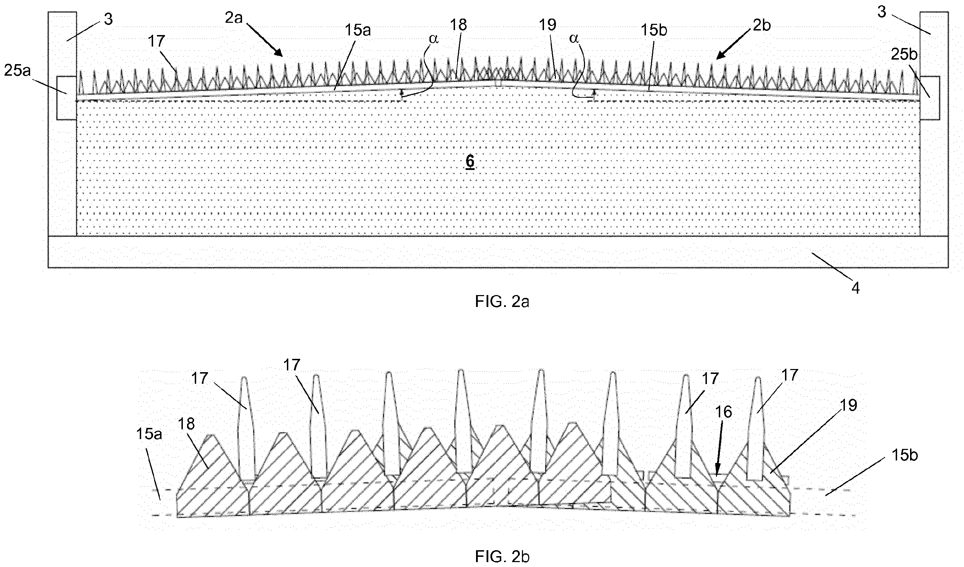

Figure 2a illustrates a first embodiment of a header according to the invention, as seen from the top. The drawing is a conceptual image, not a technically detailed drawing. The sidewalls 3 of the header are visible, and the back wall 4. The auger is not shown. The header floor 6 is not movable relative to the frame of the header, and at the back and the sides, the floor is parallel to the back wall 4 and the sidewalls 3 of the header. Contrary to the floor in the prior art header, the floor 6 has a V-shaped front border, so that the floor is longer in the centre of the header than at the sides. Preferably the tip of the V is situated in the middle of the header, as shown in the drawing, but a limited deviation from this location is possible. The increased floor length in the middle provides additional support for the crops in this area, so that problems due to the build-up and obstruction by crops are alleviated.

The cutterbar 2 now comprises a first and second portion 2a and 2b placed at an angle α relative to the transversal direction of the header. In the embodiment shown, the angle α is about 2 degrees. The cutterbar operates in the same way as in the prior art. This is illustrated in Figure 2b which shows a view of the overlap area of the knives in the header of Figure 2a. The cutterbar comprises a first support beam 15a and a second support beam 15b, placed at a fixed position relative to the floor and parallel respectively to the two legs of the V-shape of the floor's front border. The knife guards 16, comprising projecting fingers 17, are attached to these beams in the same way as in the prior art system. The two sets of knives 18 and 19 and their movement relative to the knife guards 16 are also the same as in the prior art system. As the knife sets are not parallel in the overlap area, care must be taken that the knives 18 and 19 are able to reciprocate relative to the fingers 17 in this area by sliding transversally with respect to the fingers 17, through the slots provided for this purpose at the back of the fingers 17. This may be achieved by providing the fingers 17 in this area with slots which are a little deeper in the frontal direction than the slots of the fingers outside the overlap area.

The reciprocating motion of the knives 18 and 19 is driven by two drive mechanisms 25a and 25b illustrated symbolically as two rectangular boxes in Figure 2a. The mechanisms are driven by the power source of the combine, and may be brought into practice in any manner known as such in the art, for example by a wobble box mechanism coupled to the drive axle of the header through a belt drive mounted at the side of the header. The angular position of the cutterbar portions 2a and 2b relative to the respective drive mechanisms 25a and 25b may require a mechanical adjustment of the existing drive mechanisms, depending on the type of mechanism that is used.

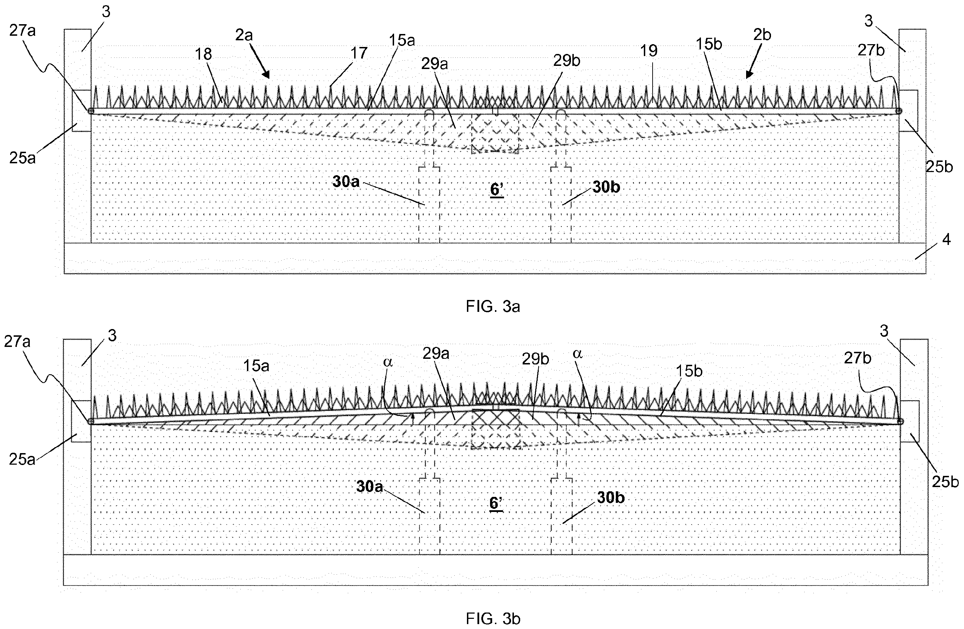

According to a second embodiment, the shape of the header floor is adjustable between a straight front border and a V-shaped front border, i.e. the angle α is adjustable between zero and a given maximum. A first way of bringing this embodiment into practice is illustrated in Figures 3a and 3b. The cutterbar 2a+2b is the same as in the embodiment with the fixed angle α of Figure 2a, i.e. the cutterbar comprises two support beams 15a and 15b, with knife guard fingers 17 attached to these beams 15a and 15b and with respective sets of knives 18 and 19 arranged to reciprocate relative to the knife guards, driven by respective drive mechanisms 25a and 25b. The header floor comprises a rectangular floorboard 6' with a straight front border that is fixed with respect to the header frame.

Contrary to the prior art and to the first embodiment, the two cutterbar portions 2a and 2b are now pivotable about vertical pivot axes 27a and 27b respectively, the pivot axes being placed at the outer ends of the respective support beams 15a and 15b, at the two sides of the header. This may be realized by coupling the support beams 15a and 15b to the drive mechanisms 25a and 25b through a hinge or a ball joint for example. In order to maintain a closed floor surface when the support beams 15a and 15b are pivoted forward from the straight position in Figure 3a to a V-shaped position in Figure 3b, triangular plates 29a and 29b are fixed to the support beams 15a and 15b. In the straight position (Fig. 3a), the triangular plates overlap each other in a central area of the header and are fully placed underneath the rectangular floorboard 6'. When the support beams 15a and 15b are rotated forward so as to assume the V-shape (Fig. 3b), the plates 29a and 29b are rotated forward with the beams 15a and 15b, so as to create a V-shaped extension of the rectangular floorboard 6', by placing the beams 15a and 15b at an angle α relative to the front border of the floorboard 6'. In the central area, the plates 29a and 29b continue to overlap when the plates are in the V-shape, so as to avoid the appearance of a gap in the centre. The plates 29a and 29b could have a different shape apart from being triangular. They could for example be rectangular. The degree of overlap between the plates 29a and 29b in the central area is calculated as a function of the maximum inclination angle α of the support beams 15a and 15b so as to suffice for maintaining a closed floor, without the appearance of a gap, regardless of the value of α between zero and the maximum. The angle α could for example be controllable continuously within a range of zero to 3 degrees.

The rotation of the cutterbar portions 2a and 2b towards the V-shape and back may be driven by any suitable means, for example by a pair of variable length actuators 30a and 30b, coupled between the frame of the header and the support beams 15a and 15b respectively. The actuators are preferably hydraulic actuators driven by a hydraulic power source within the combine harvester to which the header is attached. The actuators 30a and 30b and their connection to the support beams 15a and 15b are shown in a simplified and schematic way. The connection of the actuators 30a and 30b to the respective support beams 15a and 15b may be realized in any suitable technical manner, for example by a sliding pin connection if the actuators are arranged in a fixed position relative to the header frame as shown in the drawing, and/or by arranging the actuators 30 and 30b themselves to be rotatable relative to the header frame. The actuators 30 and 30b may be arranged underneath the header floor. The invention is however not limited to any particular drive arrangement for driving the pivoting motion of the support beams 15a and 15b about the pivot axes 27a and 27b. Variable length actuators for this purpose could for example also be oriented parallel to the support beams 15a and 15b, with the movement of each actuator being transformed into the rotation of the respective support beams by a suitable transfer mechanism.

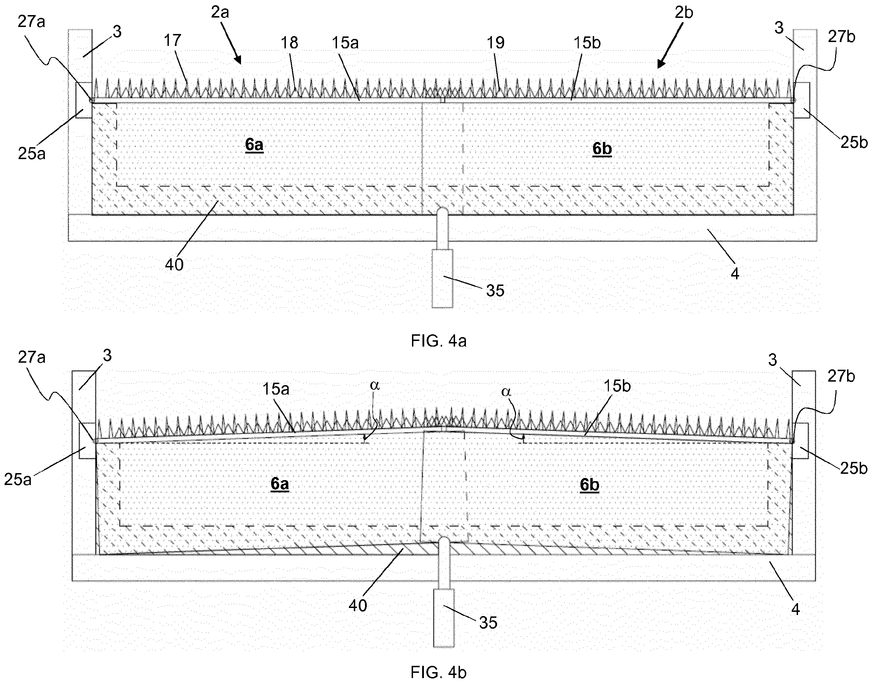

Another header according to the second embodiment, i.e. comprising a floor with a controllable V-shape, is illustrated in Figures 4a and 4b. The floor itself is now formed of two rectangular boards 6a and 6b which overlap in a central area. In the 'straight' condition shown in Figure 4a, the two boards fill up a rectangular area that corresponds to the floorboard 6' in the embodiment of Figures 3a and 3b. The cutterbar is the same as in the embodiment of Figures 3a and 3b, comprising two parts 2a and 2b, each part comprising a support beam 15a and 15b respectively, to which the knife guard fingers 17 are attached, while the reciprocating knives 18 and 19 are driven by respective drive mechanisms 25a and 25b. The support beams 15a and 15b are attached respectively to the two overlapping floor boards 6a and 6b, at the front of these floorboards. The boards 6a and 6b are pivotable about two laterally placed vertical pivot axes 27a and 27b. A single actuator 35 fixed to the frame of the header and placed centrally between the two boards 6a and 6b may be used to drive the rotation of the two boards 6a and 6b, as illustrated in the drawing. This may be realized by coupling the actuator's extending arm to each of the boards separately, by two sliding pin connections for example. Alternatively, the rotation of the boards 6a and 6b may be driven by two separate actuators, which could be arranged in the same way as the actuators 30a and 30b in the embodiment of Figures 3a and 3b.

As shown in Figure 4b, the rotation of the floorboards 6a and 6b in the forward direction, driven by the actuator 35, places the cutterbar portions 2a and 2b at an angle α relative to the transversal direction, thereby creating a V-shaped extension of the header floor, that is equivalent to the extension created by the embodiment of Figures 3a and 3b. The appearance of a gap at the front is avoided by the overlap between the floorboards 6a and 6b. In the overlap area, the support beams 15a and 15b must be designed in such a way that the edge of one board does not collide with the support beam attached to the other board.

In order to avoid the appearance of gaps at the sides and at the back of the floor boards 6a and 6b when the boards assume the V-shape, a lateral support surface 40 may be attached to the sidewalls 3 and the backwall 4 of the header, and arranged underneath and in close proximity to the floor boards 6a and 6b. The lateral support surface 40 may be formed of metal plates welded or bolted to the header walls, or of rubber strips attached to these walls. The width of the lateral support surface 40 is chosen so that any gap is covered by the presence of the lateral support surface 40, for any angular position of the floor boards 6a and 6b, between zero and a given maximum of the angle α, for example between zero and 3 degrees.

Instead of providing the lateral support surface 40, the floorboards 6a and 6b could be designed to extend beyond the sidewalls 3 and the backwall 4 of the header when they are in the 'straight' condition, so that in any of the V-shaped conditions, no gaps are formed between the pivoted boards and the walls of the header.

Any embodiment according to the invention may be combined with a mechanism for moving the entire header floor forward and backward relative to the header frame. Such mechanisms are known in the art, and typically comprise a set of variable length actuators placed at regular distances along the width of the header and attached to the header frame, while the extending arms of the actuators are coupled to the header floor. The movable header floor is then part of a subframe, comprising sidewalls which are movable relative to the stationary sidewalls of the header. The header floors shown in Figures 3 and 4 can be incorporated in such a subframe. To enable the creation of the V-shape independently of the movement of the entire floor, the actuators 30a and 30b or 35 may then be attached to the subframe. This may require an adaptation to the subframe to allow the actuators to be attached thereto.

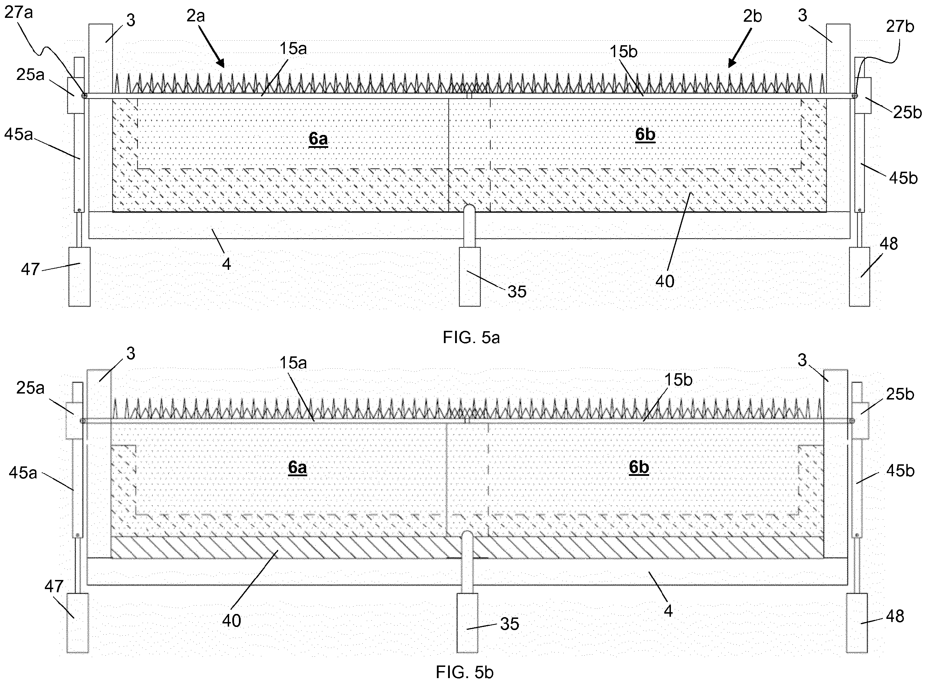

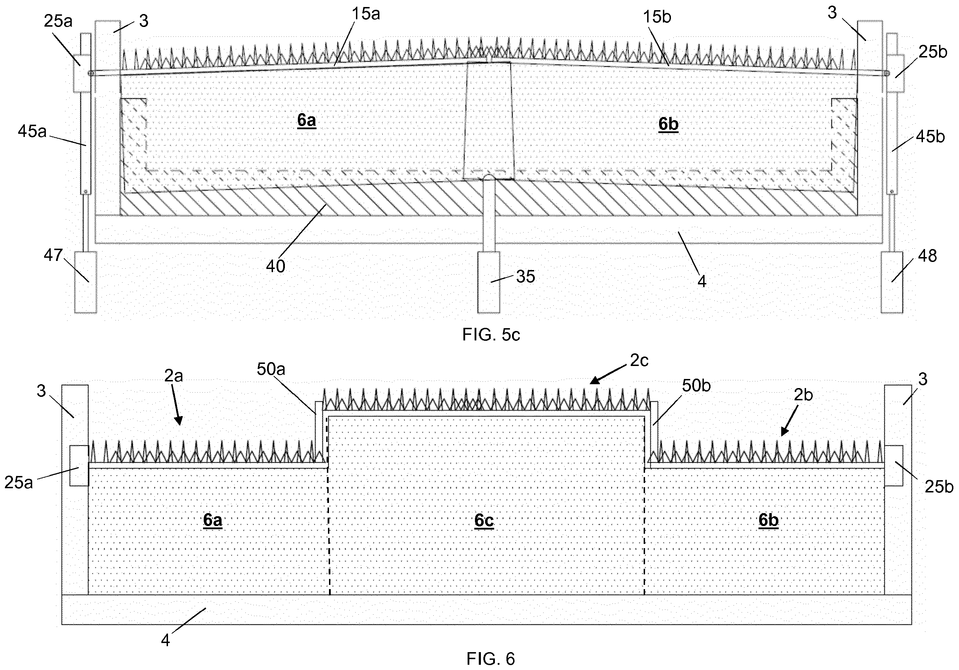

Alternatively, the actuator or actuators used for creating the V-shape may have a double function : creating the V-shape and moving the floor as a whole. Figure 5 illustrates one example of a header comprising a header floor that is extendable as a whole, whilst equally being able to assume the V-shape, using the system of Figure 4, i.e. including the two overlapping floorboards 6a and 6b. As seen in Figure 5a, the floorboards 6a and 6b and cutterbar portions 2a and 2b are attached to movable sidewalls 45a and 45b to which also the drive mechanisms 25a and 25b of the knives 18 and 19 are attached. Laterally placed actuators 47 and 48 are mounted on the header frame for moving the movable sidewalls 45a and 45b back and forth. The central actuator 35 is the same as in the embodiment of figure 4. When the three actuators 47, 48 and 35 are extended simultaneously and over the same distance, the floor moves forward in its entirety, as shown in Figure 5b. As illustrated in Figure 5c, the V-shape can be assumed and controlled in any of the extended positions of the floorboards as a whole, by controlling the central actuator 35 independently from the lateral actuators 47 and 48.

According to another alternative, the three actuators 47, 48 and 35 are configured to operate synchronously and over the same distance at all times, while the central actuator 35 is itself attached to a movable structure, i.e. movable relative to the header frame. The movable structure can then be moved forwards and backwards by a fourth actuator, for controlling the V-shape.

All of the above-described embodiments are based on a header floor with a V-shaped front border or a border adjustable between a straight border and a V-shaped border. The invention is however not limited to this solution to the above-described problem, but also comprises equivalent solutions in terms of providing a header floor that is longer in the centre than at the sides. One example is illustrated in Figure 6. The header floor in this embodiment comprises three fixed portions 6a, 6b and 6c. The central portion 6c is longer in the back to front direction of the header, than the side portions 6a and 6b, while all three floor portions have a straight front border that is parallel to the back wall 4 of the header. In other words, the central portion 6c extends further forward than the side portions 6a and 6b. The cutterbar is equally split into three portions 2a, 2b and 2c. The reciprocating knives of the side portions 2a and 2b of the cutterbar are driven by respective drive mechanisms 25a and 25b as in the previous embodiments. The central portion 2c comprises two centrally overlapping rows of reciprocating knives, driven through coupling mechanisms 50a and 50b which couple the motion of the knives of the side portions 2a and 2b of the cutterbar, to the knives of the centre portion 2c. The central portion of the cutterbar 2c may be movable forward and backward, so as to adjust the length of the central floor portion 6c. A support plate may then be welded to the central cutterbar portion 2c, so that the central floor portion remains closed when the central cutterbar portion 2c is extended in the forward direction. The movement of the central cutterbar portion 2c may be actuated by one or more adjustable length actuators coupled between the central cutterbar portion 2c and the header frame.

## Claims

1. A header for a combine harvester comprising a pair of side walls (3), a back wall (4), a header floor (6), a cutter bar (2) at the front of the header floor (6), and a rotatable auger (7) mounted above the header floor (6), for transporting harvested crop material towards a central area of the header, **characterised in that** the header floor (6) extends or is extendable further outward with respect to the back wall (4) in a central area of the header than on the sides of the header.

2. The header according to claim 1, wherein the floor (6) has a V-shaped front border, the V-shape of the border being defined by two straight legs at a non-zero angle relative to each other, and wherein the cutterbar comprises a first and second portion (2a,2b), the first and second portions being respectively parallel to the legs of the V-shape.

3. The header according to claim 1, wherein the front border of the floor (6) is adjustable between a straight border and a V-shaped border.

4. The header according to claim 3, wherein the header floor comprises a floorboard (6') with a straight front border, the cutterbar comprises a first and a second portion (2a,2b), each cutterbar portion being pivotable about respective lateral pivot axes (27a,27b) between an angular position wherein the cutterbar portions are parallel to and aligned with the front border of the floorboard (6') and one or more angular positions wherein the cutterbar portions are pivoted away from the front border so as to form a V-shape, and wherein two support plates (29a,29b) are fixed respectively to the two cutterbar portions (2a,2b), the support plates overlapping each other in a central area of the header, and wherein the support plates (29a,29b) are dimensioned so that the support plates cover any gaps between the cutterbar portions (2a,2b) and the straight front border of the floorboard (6'), when the cutterbar portions (2a,2b) are pivoted away from said front border.

5. The header according to claim 4, comprising two variable length actuators (30a,30b) configured to respectively control the angular position of the first and second cutterbar portion (2a,2b).

6. The header according to claim 3, wherein the floor comprises two floorboards (6a,6b) having each a straight front border, and overlapping each other in a central area, and wherein the cutterbar comprises a first and second portion (2a,2b), the first and second portions of the cutterbar being respectively attached to the front borders of the first and second floorboard (6a,6b), and wherein the first and second floorboards are pivotable about respective lateral pivot axes (27a,27b), between an angular position wherein the cutterbar portions (2a,2b) and the floorboards (6a,6b) are parallel and aligned, and one or more angular positions wherein the cutterbar portions (2a,2b) and the floorboards (6a,6b) are pivoted away from the back wall (4) of the header, so as to form a header floor having a V-shape at the front of the header.

7. The header according to claim 6, further comprising a support surface (40) fixed to the back wall (4) and the side walls (3) of the header, and configured to cover any gaps between the floorboards (6a,6b) and the backwall and sidewalls, when the floorboards (6a,6b) are pivoted away from the back wall (4) of the header.

8. The header according to claim 6 or 7, comprising one or two variable length actuators (35,30a,30b) configured to control the angular positions of the first and the second floorboard (6a,6b).

9. The header according to claim 1, wherein the header floor comprises three portions, a central portion (6c) and two lateral portions (6a,6b), each having a straight front border essentially parallel to the back wall (4) of the header, and wherein the front border of the central portion (6c) extends or is extendable further outward with respect to the back wall (4) than the front border of the lateral portions (6a,6b).

10. The header according to any one of the preceding claims wherein the header floor is movable forward or backward as a whole.

11. The header according to claim 10, wherein the floor comprises two floorboards (6a,6b) having each a straight front border, and overlapping each other in a central area, and wherein the cutterbar comprises a first and second portion (2a,2b), the first and second portions of the cutterbar being respectively attached to the front borders of the first and second floorboard (6a,6b), and wherein the first and second floorboards are pivotable about respective lateral pivot axes (27a,27b), between an angular position wherein the cutterbar portions (2a,2b) and the floorboards (6a,6b) are parallel and aligned, and one or more angular positions wherein the cutterbar portions (2a,2b) and the floorboards (6a,6b) are pivoted away from the back wall (4) of the header, so as to form a header floor having a V-shape at the front of the header, and wherein the floorboards (6a,6b) are pivotable relative to respective movable sidewalls (45a,45b),
further comprising
- a centrally placed variable length actuator (35) configured to control the angular positions of the first and second floorboard (6a,6b),
- lateral actuators (47,48) for moving the movable sidewalls (45a,45b) forward or backward,
wherein the centrally placed actuator (35) has the double function of controlling the angular positions of the floorboards independently of the lateral actuators (47,48), and of moving the floor forward or backward as a whole, together with the lateral actuators (47,48).

12. The header according to claim 10, wherein the floor comprises two floorboards (6a,6b) having each a straight front border, and overlapping each other in a central area, and wherein the cutterbar comprises a first and second portion (2a,2b), the first and second portions of the cutterbar being respectively attached to the front borders of the first and second floorboard (6a,6b), and wherein the first and second floorboards are pivotable about respective lateral pivot axes (27a,27b), between an angular position wherein the cutterbar portions (2a,2b) and the floorboards (6a,6b) are parallel and aligned, and one or more angular positions wherein the cutterbar portions (2a,2b) and the floorboards (6a,6b) are pivoted away from the back wall (4) of the header, so as to form a header floor having a V-shape at the front of the header, and wherein the floorboards (6a,6b) are pivotable relative to respective movable sidewalls (45a,45b),
further comprising
- a centrally placed variable length actuator (35) configured to control the angular positions of the first and second floorboard (6a,6b),
- lateral actuators (47,48) for moving the movable sidewalls (45a,45b) forward or backward,
wherein the centrally placed actuator (35) is mounted on a structure that is movable forward or backward, together with the movable sidewalls (45a,45b).

13. A combine harvester comprising a header according to any one of the preceding claims.

## Patentansprüche

1. Erntevorsatz für einen Mähdrescher, der ein Paar Seitenwände (3), eine Rückwand (4), einen Erntevorsatzboden (6), einen Schneidbalken (2) an der Vorderseite des Erntevorsatzbodens (6) und eine drehbare Förderschnecke (7) umfasst, die über dem Erntevorsatzboden (6) angebracht ist, um geerntetes Erntegut zu einem zentralen Bereich des Erntevorsatzes zu fördern,
**dadurch gekennzeichnet, dass** sich der Erntevorsatzboden (6) in Bezug auf die Rückwand (4) in einem zentralen Bereich des Erntevorsatzes weiter nach außen erstreckt oder ausziehbar ist als an den Seiten des Erntevorsatzes.

2. Erntevorsatz nach Anspruch 1, wobei der Boden (6) eine V-förmige vordere Kante aufweist, wobei die V-Form der Kante durch zwei gerade Schenkel unter einem Winkel von nicht Null relativ zueinander definiert ist, und wobei der Schneidbalken einen ersten und zweiten Abschnitt (2a, 2b) umfasst, wobei der erste und zweite Abschnitt jeweils parallel zu den Schenkeln der V-Form sind.

3. Erntevorsatz nach Anspruch 1, wobei die vordere Kante des Bodens (6) zwischen einer geraden Kante und einer V-förmigen Kante einstellbar ist.

4. Erntevorsatz nach Anspruch 3, wobei der Erntevorsatzboden eine Bodenplatte (6') mit einer geraden vorderen Kante umfasst, wobei der Schneidbalken einen ersten und einen zweiten Abschnitt (2a, 2b) aufweist, wobei jeder Abschnitt des Schneidbalkens um eine jeweilige seitliche Drehachse (27a, 27b) zwischen einer Winkelstellung, in der die Schneidbalkenabschnitte parallel zu der vorderen Kante der Bodenplatte (6') verlaufen und mit dieser ausgerichtet sind, und einer oder mehreren Winkelstellungen drehbar ist, wobei die Schneidbalkenabschnitte von der vorderen Kante derart weggedreht sind, dass sie eine V-Form bilden, und wobei zwei Stützplatten (29a, 29b) jeweils mit den zwei Schneidbalkenabschnitten (2a, 2b) befestigt sind, wobei die Stützplatten sich jeweils in einem zentralen Bereich des Erntevorsatzes überlappen und wobei die Stützplatten (29a, 29b) derart dimensioniert sind, dass die Stützplatten jegliche Lücken zwischen den Abschnitten des Schneidbalkens (2a, 2b) und der geraden vorderen Kante der Bodenplatte (6') bedecken, während die Schneidbalkenabschnitte (2a, 2b) von der vorderen Kante weggedreht sind.

5. Erntevorsatz nach Anspruch 4, umfassend zwei variable Längenbetätigungseinrichtungen (30a, 30b), die dazu eingerichtet sind, jeweils die Winkelstellung des ersten und zweiten Schneidbalkenabschnitts (2a, 2b) zu steuern.

6. Erntevorsatz nach Anspruch 3, wobei der Boden zwei Bodenplatten (6a, 6b) umfasst, die jeweils eine gerade vordere Kante aufweisen und sich gegenseitig in einem zentralen Bereich überlappen, und wobei der Schneidbalken einen ersten und zweiten Abschnitt (2a, 2b) aufweist, wobei der erste und der zweite Schneidbalkenabschnitt jeweils an den vorderen Kanten der ersten und zweiten Bodenplatte (6a, 6b) angebracht sind und wobei die ersten und zweiten Bodenplatten jeweils um seitliche Drehachsen (27a, 27b) zwischen einer Winkelstellung, in der die Schneidbalkenabschnitte (2a, 2b) und die Bodenplatten (6a, 6b) parallel und ausgerichtet sind, und einer oder mehreren Winkelstellungen drehbar sind, in denen die Schneidbalkenabschnitte (2a, 2b) und die Bodenplatten (6a, 6b) von der Rückwand (4) des Erntevorsatzes derart weggedreht sind, dass sie einen Erntevorsatzboden mit einer V-Form an der Vorderseite des Erntevorsatzes bilden.

7. Erntevorsatz nach Anspruch 6, des Weiteren mit einer Stützfläche (40), die an der Rückwand (4) und den Seitenwänden (3) des Erntevorsatzes befestigt ist und dazu eingerichtet ist, jegliche Lücken zwischen den Bodenplatten (6a, 6b) und der Rückwand und den Seitenwänden zu bedecken, während die Bodenplatten (6a, 6b) von der Rückwand (4) des Erntevorsatzes weggedreht sind.

8. Erntevorsatz nach Anspruch 6 oder 7, umfassend ein oder zwei variable Längenbetätigungseinrichtungen (35, 30a, 30b), die dazu eingerichtet sind, die Winkelstellungen der ersten und zweiten Bodenplatte (6a, 6b) zu steuern.

9. Erntevorsatz nach Anspruch 1, wobei der Erntevorsatzboden drei Abschnitte aufweist, einen zentralen Abschnitt (6c) und zwei seitliche Abschnitte (6a, 6b), die jeweils eine gerade vordere Kante aufweisen, die im Wesentlichen parallel zu der Rückwand (4) des Erntevorsatzes verläuft, und wobei sich die vordere Kante des zentralen Abschnitts (6c) in Bezug auf die Rückwand (4) weiter nach außen erstreckt oder ausziehbar ist als die vordere Kante der seitlichen Abschnitte (6a, 6b).

10. Erntevorsatz nach einem der vorhergehenden Ansprüche, wobei der Erntevorsatzboden als Ganzes vorwärts oder rückwärts bewegbar ist.

11. Erntevorsatz nach Anspruch 10, wobei der Boden zwei Bodenplatten (6a, 6b) umfasst, die jeweils eine gerade vordere Kante aufweisen und sich in einem zentralen Bereich überlappen, und wobei der Schneidbalken einen ersten und einen zweiten Abschnitt (2a, 2b) umfasst, wobei der erste und der zweite Abschnitt des Schneidbalkens jeweils an den vorderen Kanten der ersten und der zweiten Bodenplatte (6a, 6b) angebracht sind und wobei die erste und zweite Bodenplatte um jeweilige seitliche Drehachsen (27a, 27b) zwischen einer Winkelstellung, in der die Schneidbalkenabschnitte (2a, 2b) und die Bodenplatten (6a, 6b) parallel und ausgerichtet sind, und einer oder mehreren Winkelstellungen drehbar sind, in denen die Schneidbalkenabschnitte (2a, 2b) und die Bodenplatten (6a, 6b) von der Rückwand (4) des Erntevorsatzes derart weggedreht sind, dass sie einen Erntevorsatzboden mit einer V-Form an der Vorderseite des Erntevorsatzes bilden, und wobei die Bodenplatten (6a, 6b) relativ zu den jeweiligen bewegbaren Seitenwänden (45a, 45b) drehbar sind, des Weiteren umfassend
- eine zentral angeordnete variable Längenbetätigungseinrichtung (35), die dazu eingerichtet ist, die Winkelstellungen der ersten und zweiten Bodenplatte (6a, 6b) zu steuern
- seitliche Betätigungseinrichtungen (47, 48) zum Vorwärts- oder Rückwärtsbewegen der bewegbaren Seitenwände (45a, 45b),
wobei die zentral angeordnete Betätigungseinrichtung (35) die Doppelfunktion aufweist, die Winkelstellungen der Bodenplatten unabhängig von den seitlichen Betätigungseinrichtungen (47, 48) zu steuern und den Boden zusammen mit den seitlichen Betätigungseinrichtungen (47, 48) als Ganzes vorwärts oder rückwärts zu bewegen.

12. Erntevorsatz nach Anspruch 10, wobei der Boden zwei Bodenplatten (6a, 6b) umfasst, die jeweils eine gerade vordere Kante aufweisen und sich gegenseitig in einem zentralen Bereich überlappen, und wobei der Schneidbalken einen ersten und zweiten Abschnitt (2a, 2b) aufweist, wobei der erste und zweite Schneidbalkenabschnitt jeweils an den vorderen Kanten der ersten und zweiten Bodenplatte (6a, 6b) angebracht sind, und wobei die erste und zweite Bodenplatte um eine jeweilige seitliche Drehachse (27a, 27b) zwischen einer Winkelstellung, in der die Schneidbalkenabschnitte (2a, 2b) und die Bodenplatten (6a, 6b) parallel und ausgerichtet sind, und einer oder mehreren Winkelstellungen drehbar sind, in denen die Schneidbalkenabschnitte (2a, 2b) und die Bodenplatten (6a, 6b) von der Rückwand (4) des Erntevorsatzes derart weggedreht sind, dass sie einen Erntevorsatzboden mit einer V-Form an der Vorderseite des Erntevorsatzes bilden, und wobei die Bodenplatten (6a, 6b) relativ zu den jeweiligen bewegbaren Seitenwänden (45a, 45b) drehbar sind, des Weiteren umfassend
- eine zentral angeordnete variable Längenbetätigungseinrichtung (35), die dazu eingerichtet ist, die Winkelstellungen der ersten und zweiten Bodenplatte (6a, 6b) zu steuern
- seitliche Betätigungseinrichtungen (47, 48) zum Vorwärts- oder Rückwärtsbewegen der bewegbaren Seitenwände (45a, 45b),
wobei die zentral angeordnete Betätigungseinrichtung (35) auf einer Struktur angebracht ist, die zusammen mit den bewegbaren Seitenwänden (45a, 45b) vorwärts und rückwärts bewegbar ist.

13. Mähdrescher mit einem Erntevorsatz nach einem der vorhergehenden Ansprüche.

## Revendications

1. Tête pour moissonneuse-batteuse comprenant une paire de parois latérales (3), une paroi arrière (4), un fond de tête (6), une barre de coupe (2) à l'avant du fond de tête (6), et une tarière rotative (7) montée au-dessus du fond de tête (6), pour transporter le matériau de récolte vers une zone centrale de la tête, **caractérisée par le fait que** le fond de tête (6) s'étend ou est extensible vers l'extérieur par rapport à la paroi arrière (4) dans une zone centrale de la tête par rapport aux côtés de la tête.

2. Tête selon la revendication 1, dans laquelle le fond (6) a une bordure avant en forme de V, la forme en V de la bordure étant définie par deux pieds droits formant un angle non nul l'un par rapport à l'autre, et dans laquelle la barre de coupe comprend une première et une seconde partie (2a, 2b), la première et la seconde partie étant respectivement parallèles aux pieds de la forme en V.

3. Tête selon la revendication 1, dans laquelle la bordure avant du fond (6) est réglable entre une bordure droite et une bordure en forme de V.

4. Tête selon la revendication 3, dans laquelle le fond de tête comprend un plancher (6') avec une bordure avant droite, la barre de coupe comprend une première et une seconde partie (2a, 2b), chaque partie de barre de coupe pouvant pivoter autour d'axes de pivotement latéraux respectifs (27a, 27b) entre une position angulaire dans laquelle les parties de barre de coupe sont parallèles et alignées avec la bordure avant du plancher (6') et une ou plusieurs positions angulaires dans lesquelles les parties de barre de coupe sont pivotées à l'écart de la bordure avant de manière à former une forme en V, et dans laquelle deux plaques de support (29a, 29b) sont fixées respectivement aux deux parties de barre de coupe (2a, 2b), les plaques de support se chevauchant dans une zone centrale de la tête, et dans laquelle les plaques de support (29a, 29b) sont dimensionnées de manière à couvrir tout espace entre les parties de barre de coupe (2a, 2b) et la bordure avant droite du plancher (6'), lorsque les parties de barre de coupe (2a, 2b) sont pivotées pour s'écarter de ladite bordure avant.

5. Tête selon la revendication 4, comprenant deux actionneurs à longueur variable (30a, 30b) configurés pour commander respectivement la position angulaire de la première et de la seconde partie de barre de coupe (2a, 2b).

6. Tête selon la revendication 3, dans laquelle le fond comprend deux planchers (6a, 6b) ayant chacun une bordure avant droite et se chevauchant dans une zone centrale, et dans laquelle la barre de coupe comprend une première et une seconde partie (2a, 2b), la première et la seconde partie de barre de coupe étant respectivement attachées aux bordures avant du premier et du second plancher (6a, 6b), et dans laquelle le premier et le second plancher peuvent pivoter autour d'axes de pivotement latéraux respectifs (27a, 27b), entre une position angulaire dans laquelle les parties de barre de coupe (2a, 2b) et les planchers (6a, 6b) sont parallèles et alignés, et une ou plusieurs positions angulaires dans lesquelles les parties de barre de coupe (2a, 2b) et les planchers (6a, 6b) sont éloignés de la paroi arrière (4) de la tête, de manière à former un fond de tête ayant une forme de V à l'avant de la tête.

7. Tête selon la revendication 6, comprenant en outre une surface de support (40) fixée à la paroi arrière (4) et aux parois latérales (3) de la tête, et configurée pour couvrir tout espace entre les planchers (6a, 6b) et la paroi arrière et les parois latérales, lorsque les planchers (6a, 6b) sont pivotés à l'écart de la paroi arrière (4) de la tête.

8. Tête selon la revendication 6 ou 7, comprenant un ou deux actionneurs à longueur variable (35, 30a, 30b) configurés pour commander les positions angulaires du premier et du second planchers (6a, 6b).

9. Tête selon la revendication 1, dans laquelle le fond de tête comprend trois parties, une partie centrale (6c) et deux parties latérales (6a, 6b), chacune ayant une bordure avant droite essentiellement parallèle à la paroi arrière (4) de la tête, et dans laquelle la bordure avant de la partie centrale (6c) s'étend ou peut s'étendre plus loin vers l'extérieur par rapport à la paroi arrière (4) que la bordure avant des parties latérales (6a, 6b).

10. Tête selon l'une quelconque des revendications précédentes, dans laquelle le fond de tête peut être déplacé vers l'avant ou vers l'arrière dans son ensemble.

11. Tête selon la revendication 10, dans laquelle le fond comprend deux planchers (6a, 6b) ayant chacun une bordure avant droite et se chevauchant dans une zone centrale, et dans laquelle la barre de coupe comprend une première et une seconde partie (2a, 2b), la première et la seconde partie de barre de coupe étant respectivement attachées aux bordures avant du premier et du second plancher (6a, 6b), et dans laquelle le premier et le second plancher peuvent pivoter autour d'axes de pivotement latéraux respectifs (27a, 27b), entre une position angulaire dans laquelle les parties de barre de coupe (2a, 2b) et les planchers (6a, 6b) sont parallèles et alignés, et une ou plusieurs positions angulaires dans lesquelles les parties de barre de coupe (2a, 2b) et les planchers (6a, 6b) sont éloignés de la paroi arrière (4) de la tête, de manière à former un fond de tête ayant une forme de V à l'avant de la tête, et dans laquelle les planchers (6a,6b) peuvent pivoter par rapport aux parois latérales mobiles respectives (45a, 45b),
comprenant en outre
- un actionneur de longueur variable placé au centre (35) et configuré pour commander les positions angulaires du premier et du second plancher (6a, 6b),
- des actionneurs latéraux (47, 48) pour déplacer les parois latérales mobiles (45a, 45b) vers l'avant ou vers l'arrière,
dans laquelle l'actionneur placé au centre (35) a la double fonction de commander les positions angulaires des planchers indépendamment des actionneurs latéraux (47, 48), et de déplacer le fond vers l'avant ou vers l'arrière dans son ensemble, avec les actionneurs latéraux (47, 48).

12. Tête selon la revendication 10, dans laquelle le fond comprend deux planchers (6a, 6b) ayant chacun une bordure avant droite et se chevauchant dans une zone centrale, et dans laquelle la barre de coupe comprend une première et une seconde partie (2a, 2b), la première et la seconde partie de barre de coupe étant respectivement attachées aux bordures avant du premier et du second plancher (6a, 6b), et dans laquelle le premier et le second plancher peuvent pivoter autour d'axes de pivotement latéraux respectifs (27a, 27b), entre une position angulaire dans laquelle les parties de barre de coupe (2a, 2b) et les planchers (6a, 6b) sont parallèles et alignés, et une ou plusieurs positions angulaires dans lesquelles les parties de barre de coupe (2a, 2b) et les planchers (6a, 6b) sont éloignés de la paroi arrière (4) de la tête, de manière à former un fond de tête ayant une forme de V à l'avant de la tête, et dans laquelle les planchers (6a, 6b) peuvent pivoter par rapport aux parois latérales mobiles respectives (45a, 45b), comprenant en outre
- un actionneur de longueur variable placé au centre (35) et configuré pour commander les positions angulaires du premier et du second plancher (6a, 6b),
- des actionneurs latéraux (47, 48) pour déplacer les parois latérales mobiles (45a, 45b) vers l'avant ou vers l'arrière,
dans lequel l'actionneur placé au centre (35) est monté sur une structure qui peut être déplacée vers l'avant ou vers l'arrière, avec les parois latérales mobiles (45a, 45b).

13. Moissonneuse-batteuse comprenant une tête selon l'une quelconque des revendications précédentes.
